# EUROPÄISCHE PATENTSCHRIFT

(11) **EP 2 730 390 B1**
(45) Veröffentlichungstag und Bekanntmachung des Hinweises auf die Patenterteilung: **28.06.2017**
(21) Anmeldenummer: 14000095.1
(22) Anmeldetag: 10.04.2012
(51) Int. Cl.: B29C 49/76, B65D 1/04, B65D 81/32, B29C 49/04, B29C 49/22, B29C 49/58, B29D 22/00

(54) **VERFAHREN ZUR GEWÄHRLEISTUNG DER MASSHALTIGKEIT EINER AUSGIESSÖFFNUNG IN BZW. AN EINEM IN EINEM EXTRUSIONSBLASVERFAHREN HERGESTELLTEN KUNSTSTOFFBEHÄLTER**
METHOD FOR CALIBRATION OF A SPOUT OPENING OF A CONTAINER, WHICH IS PRODUCED BY AN EXTRUSION BLOW MOULDING PROCESS
PROCÉDÉ DE CALIBRAGE D'UNE OUVERTURE D'UN RÉCIPIENT, QUI EST PRODUITE PAR UN PROCÉDÉ D'EXTRUSION SOUFFLAGE

(30) Priorität: 16.05.2011 CH 825112011
(43) Veröffentlichungstag der Anmeldung: 14.05.2014
(62) Teilanmeldung aus: 12714580.3
(73) Patentinhaber: Alpla-Werke Alwin Lehner GMBH & Co.KG, A-6971 Hard (AT)
(72) Erfinder: Künz, Johann, AT-6971 Hard (AT)
(74) Vertreter: Bohest AG Branch Ostschweiz

(56) Entgegenhaltungen:
- WO-A1-03/029103
- GB-A- 688 997
- US-A- 2 861 295
- US-A- 3 412 187
- US-A- 4 217 328
- US-A1- 2005 121 034
- US-B1- 6 602 459

## Beschreibung

Die Erfindung betrifft Verfahren zur Gewährleistung der Masshaltigkeit, insbesondere zum Kalibrieren, einer Ausgiessöffnung in bzw. an einem in einem Extrusionsblasverfahren hergestellten Kunststoffbehälter gemäss dem Oberbegriff des Patentanspruchs 1. Die Erfindung betrifft auch nach dem erfindungsgemässen Verfahren kalibrierte Kunststoffbehälter.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältern, insbesondere Kunststoffflaschen, beispielsweise aus Polyethylen oder Polypropylen, erfolgt oft in einem Extrusionsblasverfahren, insbesondere in einem Schlauchblasverfahren. Dabei wird mit einem Extrusionskopf ein Kunststoffschlauch extrudiert, in die Formkavität eines Blasformwerkzeugs eingebracht, durch Überdruck aufgeblasen, abgekühlt und entformt. Das Aufblasen eines in die Blasformkavität eingebrachten Kunststoffschlauchabschnitts erfolgt üblicherweise mit einem Kalibrierblasdorn, der durch eine Öffnung der Blasformkavität eingefahren wird. Der Kalibrierblasdorn hat einerseits die Aufgabe, Luft in den Kunststoffschlauch einzubringen, damit dieser gemäss der Blasformkavität ausgeformt wird. Andererseits dient der Kalibrierblasdorn auch zur definierten Innenausformung (Kalibrierung) des Halses des Kunststoffbehälters, an dem die Ausgiessöffnung vorgesehen ist. Diese formgebende Funktion des Kalibrierdorns besteht insbesondere in einer definierten Festlegung des Innendurchmessers des Halses. Dazu wird der Kalibrierblasdorn durch die Öffnung des geschlossenen Blasformwerkzeugs in den Schlauchabschnitt eingefahren. Dabei wird überschüssiges Kunststoffmaterial axial verdrängt, und der Innendurchmesser des Halses mit der Ausgiessöffnung festgelegt.

In der US 2005/0121034 ist ein Extrusionsblasverfahren für die Herstellung eines Beatmungsbeutels beschrieben, der mit einem exakt kalibrierten Anschlussstück ausgebildet ist. Zum Kalibrieren des Anschlussstücks wird ein Kalibrierblasdorn in ein in eine Blasform eingelegtes Schlauchstück in seine Endposition vorgeschoben, nachdem eine Kopfplatte der Blasform geschlossen ist, jedoch noch bevor die Blasformhälften der Blasform geschlossen sind. Danach wird die Blasform geschlossen, wobei das Anschlussstück durch Fliesspressen in die gewünschte Form gebracht wird.

In der US-2,861,295 ist ein Extrusionsblasverfahren beschrieben, bei dem ein Blasdorn mit lateralem Spiel innerhalb eines inneren Rings einer Blasdüse angeordnet ist. Der Blasdorn durchsetzt dabei den Extruderkopf axial. Die bewegliche Halterung des Blasdorns ermöglicht es, diesen auch bei geschlosssener Blasform in einem gewissen Umfang lateral zu verschieben. Wie die Behälteröffnung kalibriert wird, ist in der Druckschrift nicht beschrieben.

In der US-3,412,187 ist ein klassisches Verfahren zum Kalibrieren der Ausgiessöffnung eines Flaschenhalses beschrieben. Dabei wird zunächst über einen Blasdorn, der in einen in einer geschlossenen Blasform angeordneten extrudierten Schlauchabschnitt eingefahren wird, der Schlauchabschnitt radial expandiert. Dabei werden an seiner Aussenseite Gewindeabschnitte gemäss der Forminnenwandung der Blasform ausgebildet. Beim weiteren Einfahren des Blasdorns wird die Halsinnenwandung gemäss einer zylindrischen Kalibrierfläche am Blasdorn kalibriert. Durch Zustellen eines den Blasdorn konzentrisch umgebenden Kalibriermantels auf die Mündung der Blasform kann auch noch die Mündung des Flaschenhalses kalibriert werden.

In der US-4,217,328 ist die Herstellung eines Kunststoffbehälters in einem Extrusionsblasverfahren beschrieben, bei dem der Behälter kurz vor dem Ende des Extrusionsblasverfahrens befüllt und danach seine Öffnungen mit aufbrechbaren Verschlüssen versehen werden. Die Öffnungen können verschieden grosse Durchmesser aufweisen. Der Behälter besitzt einen röhrchenartigen Kanal, der über einen Diffusor mit einer Hauptkammer des Behälters verbunden ist. Der röhrchenartige Kanal und die Hauptkammer des Behälters werden über zwei separat zustellbare Blasdorne aufgeblasen. Die Blasdorne dienen zugleich auch zur Befüllung des Behälters kurz vor dem Ende des Blasverfahrens. Am Ende des Blasverfahrens wird ein oberer Teil der Blasform geschlossen, um die Öffnungen des Behälters mit den aufbrechbaren Verschlüssen zu versehen. Eine Kalibrierung der Öffnungen des Behälters ist nicht beschrieben und ist mit Hinblick darauf, dass er aufbrechbare Verschlüsse aufweist, auch nicht erforderlich.

Bei Ausgiessöffnungen mit den üblichen Innendurchmessern von beispielsweise etwa 10 mm bis etwa 85 mm erweist sich diese Art der Kalibrierung als sehr praktikabel und die geforderte Masshaltigkeit ist in der Regel problemlos erreichbar. Bei kleineren Innendurchmessern von weniger als 7 mm besteht jedoch die Gefahr, dass der Kalibrierblasdorn das erweichte Kunststoffmaterial beim axialen Zustellen durch die Öffnung des Blasformwerkzeugs vor sich herschiebt und es dadurch zu einer fehlerhaften Ausbildung des Halses kommt. Dies kann besonders dann auftreten, wenn kein Kunststoffmaterial von den darüber liegenden Bereichen während der axialen Bewegung des Kalibrierblasdorns für die Kalibrierung zur Verfügung steht. Noch schwieriger gestaltet sich das Kalibrieren bei Kunststoffbehältern, welche zusätzlich zu der grösseren Ausgiessöffnung eine kleinere Ausgiessöffnung aufweisen, die beispielsweise innerhalb des Kunststoffbehälters vorgesehen ist. Die kleinere Ausgiessöffnung ist beispielsweise mit einer weiteren Kammer des Kunststoffbehälters verbunden. In weiteren Ausführungsvariante kann die kleinere Ausgiessöffnung ein Austritt eines innerhalb des Kunststoffbehälters angeordneten Dosierröhrchens sein, der mit einer Dosierkammer zu verbinden ist, die üblicherweise in einen Ausgiessaufsatz integriert ist, der auf den Hals des fertig geblasenen Kunststoffbehälters aufgesetzt wird. Für das Aufblasen derartiger Kunststoffbehälter werden Doppel-Kalibrierblasdorne eingesetzt, die derart ausgebildet sind, dass die Ausgiessöffnung am Hals des Kunststoffbehälters und diejenige in die zweite Kammer bzw. in das Dosierröhrchen im wesentlichen zeitgleich ausgeformt werden.

Während das Kalibrieren der Ausgiessöffnung am Hals wegen dessen üblicherweise relativ grossen Innendurchmessers problemlos bewerkstelligbar ist, erweist sich das unmittelbare Kalibrieren der kleineren Öffnung mit dem Doppel-Kalibrierblasdorn als sehr schwierig. Aus diesem Grund erfolgt das Kalibrieren der kleineren Öffnung innerhalb des aufgeblasenen Behälters üblicherweise durch eine spanabhebende Bearbeitung, insbesondere durch Spindeln, die an den Blasvorgang anschliesst, um die geforderte Masshaltigkeit von beispielsweise bis zu ± 0,03 mm zu erzielen. Die spanabhebende Bearbeitung weist jedoch den Nachteil auf, dass Späne in das Innere des Behälters fallen und von dort wieder entfernt werden müssen. Im Fall eines Dosierröhrchens mit relativ kleinem Innendurchmesser besteht die Gefahr, dass die Späne nicht vollständig wieder beseitigt werden können. Diese behindern dann den Durchfluss durch das Dosierröhrchen und können dazu führen, dass der hergestellte Kunststoffbehälter aussortiert werden muss. Zudem stellen die spanabhebende Bearbeitung und die nachträgliche Beseitigung der Späne zusätzliche Arbeitsschritte dar, welche den Aufwand für die Herstellung des Kunststoffbehälters erhöhen.

Aufgabe der vorliegenden Erfindung ist es daher, diesen Nachteilen der Extrusionsblasverfahren des Stands der Technik abzuhelfen. Ein Extrusionsblasverfahren für Kunststoffbehälter soll dahingehend modifiziert werden, dass auch Ausgiessöffnungen mit kleineren Durchmessern ohne zusätzliche, an den Blasformprozess anschliessende Arbeitsschritte kalibriert werden können, um die geforderte Masshaltigkeit einzuhalten. Insbesondere soll es das Verfahren erlauben, auch bei Kunststoffbehältern mit einer zusätzlichen, gegebenenfalls innerhalb des Behälters angeordneten Ausgiessöffnung einer zusätzlichen Kammer oder eines Dosierröhrchens ein Kalibrieren der Ausgiessöffnungen im wesentlichen zeitgleich mit einem eingefahrenen Doppel-Kalibrierblasdorn durchzuführen.

Die Lösung dieser Aufgaben besteht in einem Verfahren zur Gewährleistung der Masshaltigkeit, insbesondere zum Kalibrieren, einer Ausgiessöffnung in bzw. an einem in einem Extrusionsblasverfahren hergestellten Kunststoffbehälter, welches die im Patentanspruch 1 aufgelisteten Merkmale aufweist. Weiterbildungen und/oder vorteilhafte Ausführungsvarianten der Erfindung sind Gegenstand der abhängigen Verfahrensansprüche.

Die Erfindung schafft ein Verfahren zur Gewährleistung der Masshaltigkeit, insbesondere zum Kalibrieren, einer Ausgiessöffnung in bzw. an einem in einem Extrusionsblasverfahren hergestellten Kunststoffbehälter. Bei dem Verfahren wird ein Abschnitt eines durch eine Extrusionsdüse ein oder mehrschichtig extrudierten Kunststoffschlauchs in eine Formkavität eines Blasformwerkzeugs eingelegt und durch einen Kalibrierblasdorn gemäss der umschlossenen Formkavität aufgeblasen. Dabei wird wenigstens eine Ausgiessöffnung des Kunststoffbehälters hinsichtlich ihres Innendurchmesser und ihrer Innenkontur festgelegt, insbesondere kalibriert. Danach wird der fertig aufgeblasene Kunststoffbehälter entformt. Der Kalibrierblasdorn wird axial in den Kunststoffschlauchabschnitt in eine axiale Position eingefahren, die axial etwa 0,3 mm bis etwa 5 mm von seiner Endposition beabstandet ist, nachdem eine Kopfplatte des Blasformwerkzeugs geschlossen wurde, jedoch bevor das Blasformwerkzeug seine vollständig geschlossene Position erreicht hat. Erst nachdem der Kalibrierblasdorn die gewünschte axiale Position erreicht hat, wird das Blasformwerkzeug vollständig geschlossen. Nach dem vollständigen Schliessen des Blasformwerkzeugs wird der Kalibrierblasdorn in seine axiale Endposition vorgeschoben.

Das erfindungsgemässe Kalibrierverfahren unterscheidet sich von den Verfahren des Stands der Technik dadurch, dass das Kalibrieren der Öffnung durch ein radiales Quetschen erfolgt. Es wird nur die Kopfplatte des Blasformwerkzeugs vollständig geschlossen, damit der Kunststoffschlauchabschnitt sicher gehalten ist. Das Blasformwerkzeug wird nicht vollständig geschlossen. Beim Einfahren des Kalibrierblasdorns kann der Kunststoffschlauch in radialer Richtung aufgeweitet werden. Ein axiales Wegschieben des Kunststoffschlauchs wird dadurch vermieden. Beim vollständigen Schliessen des Blasformwerkzeugs wird der Kunststoffschlauch im Bereich der Kalibrierflächen des Kalibrierblasdorns radial gequetscht. Überschüssiges Kunststoffmaterial wird dabei in axialer Richtung verdrängt. Das Abtrennen des Kunststoffschlauchabschnitts erfolgt erst, wenn das Blasformwerkzeug vollständig geschlossen ist.

Das Kalibrieren der Ausgiessöffnung(en) erfolgt wie bei den bekannten Verfahren des Stands der Technik während des Aufblasvorgangs. Separate Arbeitsschritte, wie beispielsweise eine spanabhebende Bearbeitung mit anschliessender Entfernung der Späne, die erst anschliessend an den Extrusionsblasprozess vorgenommen werden, können entfallen. Das erfindungsgemässe radiale Kalibrieren kann auf konventionellen Extrusionsblasmaschinen durchgeführt werden. Das geänderte Kalibrierverfahren muss bloss in der Steuerung des Vorschubs des Kalibrierblasdorns und des Schliessmechnismus für das Blasformwerkzeug entsprechend berücksichtigt werden.

Üblicherweise umfasst das Blasformwerkzeug zwei Blasformhälften, die etwa senkrecht zur Vorschubrichtung des Kalibrierblasdorns aufeinander zustellbar und wieder trennbar sind. Der Kalibrierblasdorn wird axial in den Kunststoffschlauchabschnitt eingefahren, während die Blasformhälften noch einen Abstand voneinander aufweisen, der etwa 0,5 mm bis 10 mm grösser ist, als der Innendurchmesser einer Ausgiessöffnung am Hals des Kunststoffbehälters. Durch diesen Abstand ist sichergestellt, dass der Kalibrierblasdorn ungehindert in den Kunststoffschlauchabschnitt eingefahren werden kann, wobei dieser noch in radiale Richtung aufgeweitet werden kann. Andererseits ist der Abstand der Blasformhälften voneinander nicht zu gross, damit der Schliessvorgang in ausreichend kurzer Zeit vonstatten gehen kann. Das Schliessen der Blasformhälften erfolgt jedoch erst, wenn der Kalibrierblasdorn axial in die gewünschte Position vorgeschoben worden ist. Der Innendurchmesser der Ausgiessöffnung am Hals des Kunststoffbehälters entspricht dabei dem Aussendurchmesser des Kalibrierdorns in diesem Kalibrierabschnitt.

Der Kalibrierblasdorn kann während des Kalibrierverfahrens intermittierend vorgeschoben werden, d.h. er wird bis zu seiner vorgesehenen axiale Position in den aufzublasenden Kunststoffschlauchabschnitt vorgeschoben, ruht während des vollständigen Schliessens des Blasformwerkzeugs und wird nach dem Schliessen des Blasformwerkzeugs in seine axiale Endposition nachgefahren. Eine alternative Verfahrensvariante sieht vor, dass der Kalibrierblasdorn kontinuierlich vorgeschoben wird, bis er seine axiale Endposition erreicht hat, d.h. dass er auch während des Schliessvorgangs des Blasformwerkzeugs kontinuierlich axial vorgeschoben wird. Diese alternative Verfahrensvariante ist steuerungstechnisch einfacher umzusetzen. Der Kalibrierblasdorn wird nur entweder kontinuierlich in seine axiale Endposition vorgeschoben oder nach dem Öffnen des Blasformwerkzeugs wieder in seine Ausgangsposition zurückgezogen.

Die axiale Vorschubgeschwindigkeit des Kalibrierblasdorns beträgt etwa 5 mm/s bis etwa 80 mm/s. Diese Vorschubgeschwindigkeit gilt sowohl für den intermittierenden Vorschub als auch für den kontinuierlichen Vorschub des Kalibrierblasdorns.

Eine zweckmässige Ausführungsvariante des erfindungsgemässen Verfahrens sieht die Verwendung eines Doppel-Kalibrierblasdorns, der zwei Kalibrierbereiche für zwei Ausgiessöffnungen von speziellen Kunststoffbehältern aufweist, vor. Derartige spezielle Kunststoffbehälter weisen beispielsweise zwei Kammern auf. Eine andere Art von Kunststoffbehältern kann ein im Inneren des Behälters angeordnetes Dosierröhrchen aufweisen, das im Bodenbereich des Behälters mündet. Die Verwendung eines Doppel-Kalibrierblasdorns mit zwei Kalibrierbereichen erlaubt die gleichzeitige Kalibrierung von beiden Ausgiessöffnungen.

Die Verfahrensführung erfolgt analog zu der vorstehend geschilderten Verfahrensführung mit einem Kalibrierblasdorn mit nur einem Kalibrierbereich.

Bei der Durchführung des erfindungsgemässen Verfahrens mit einem Doppel-Kalibrierblasdorn werden die Kalibrierbereiche des Doppel-Kalibrierblasdorns miteinander gekoppelt axial verschoben. Dies erfolgt einfach dadurch, dass die beiden Kalibrierbereiche des Doppel-Kalibrierblasdorns an zwei Teil-Kalibrierblasdornen vorgesehen sind, die fest miteinander verbunden sind. Dabei sind die Teil-Kalibrierblasdorne auch an eine gemeinsame Speisung für das Blasmedium, üblicherweise Luft, und eine gemeinsame Abführleitung für das aus dem aufgeblasenen Kunststoffschlauchabschnitt austretende heisse Blasmedium angeschlossen.

Durch die Verwendung eines Doppel-Kalibrierblasdorns, dessen Kalibrierbereiche in unterschiedlicher axialer Höhe angeordnet sind, können auch Ausgiessöffnungen kalibriert werden, die axial tiefer, d.h. innerhalb des aufzublasenden Kunststoffbehälters näher dem Boden liegend, angeordnet sind.

Wird ein Doppel-Kalibrierblasdorn eingesetzt, dessen Kalibrierbereiche mit voneinander verschiedenen Aussendurchmessern ausgebildet sind, können die üblicherweise einen grösseren Innendurchmesser aufweisende Ausgiessöffnung am Hals des Kunststoffbehälters und eine im Durchmesser kleinere, axial tiefer angeordnete zweite Ausgiessöffnung im Inneren des Kunststoffbehälters praktisch zeitgleich kalibriert werden.

Im Extrusionsblasverfahren hergestellte Kunststoffbehälter, deren Ausgiessöffnungen gemäss einem oder mehreren der vorstehenden Patentansprüche kalibriert worden sind, zeichnen sich durch eine sehr hohe Masshaltigkeit bei sehr geringen Toleranzen von bis zu ± 0.03 mm aus.

Besonderes zweckmässig erweist sich das erfindungsgemässe Kalibrierverfahren für die Herstellung von Kunststoffbehältern, welche wenigstens zwei Ausgiessöffnungen aufweisen, die eine hohe Massgenauigkeit aufweisen müssen. Die Anwendung des erfindungsgemässe Kalibrierverfahrens erlaubt ein sehr kostengünstiges Kalibrieren auch solcher Kunststoffflaschen.

Dabei können die Ausgiessöffnungen gleiche oder verschieden grosse Innendurchmesser aufweisen. Abhängig vom Innendurchmesser der grösseren Ausgiessöffnung kann die zu kalibrierende zweite Öffnung auch einen Innendurchmesser aufweisen, der grösser ist als 7mm.

Das erfindungsgemässe Kalibrierverfahren erweist sich insbesondere für die Herstellung von Kunststoffbehältern von Vorteil, die wenigstens eine zusätzliche Ausgiessöffnung mit einem kleineren Innendurchmesser aufweisen, die innerhalb des Kunststoffbehälters angeordnet ist. Beispielsweise ist die zusätzliche Ausgiessöffnung der Ausgang eines Dosierröhrchens, das im Bodenbereich des Kunststoffbehälters mündet. Die zusätzliche Ausgiessöffnung ist für die Kopplung an eine Dosierkammer eines Ausgiessaufsatzes ausgebildet. Dabei muss absolute Dichtigkeit gewährleistet sein. Dies ist gerade bei nach dem erfindungsgemässen Verfahren kalibrierten Öffnungen innerhalb der geforderten geringen Toleranzen von bis zu ± 0,03 mm gewährleistet.

Weitere Vorteile und Merkmale der Erfindung ergeben sich aus der nachfolgenden Beschreibung des Verfahrens unter Bezugnahme auf die schematischen Zeichnungen. Es zeigen in nicht massstabsgetreuer Darstellung:
- Fig. 1: einen Extrusionskopf mit einem extrudierten Kunststoffschlauch und einem Blasformwerkzeug mit zwei Blasformhälften in geöffneter Stellung;
- Fig. 2: das Blasformwerkzeug mit geschlossener Kopfplatte und einem von dieser gehaltenen Kunststoffschlauchabschnitt und aufeinander zugestellten Blasformhälften, die noch nicht vollständig geschlossen sind, und einen oberhalb des Blasformwerkzeugs angedeuteten Kalibrierblasdorn;
- Fig. 3: das Blasformwerkzeug mit Blasformhälften in der Position gemäss Fig. 2 und den bei geöffnetem Blasformwerkzeug axial in den Kunststoffschlauchabschnitt vorgeschobenen Kalibrierblasdorn;
- Fig. 4: eine axiale geschnittene Darstellung des Blasformwerkzeugs in der Stellung gemäss Fig. 3;
- Fig. 5: eine axial geschnittene Darstellung des Blasformwerkzeugs gemäss Fig. 4 mit vollständig geschlossenen Blasformhälften;
- Fig. 6: eine axial geschnittene Darstellung des geschlossenen Blasformwerkzeugs mit einem axial in seine Endposition nachgeschobenen Kalibrierblasdorn;
- Fig. 7: eine vergrösserte Schnittdarstellung zur Erläuterung der Position des Kalibrierblasdorns in Fig. 5;
- Fig. 8: eine vergrösserte Schnittdarstellung zur Erläuterung der Endposition des Kalibrierblasdorns in Fig. 6;
- Fig. 9: das Blasformwerkzeug mit geöffneter Kopfplatte und geöffneten Blasformhälften zum Zeitpunkt der Entformung des geblasenen Kunststoffbehälters;
- Fig. 10: eine Ansicht einer Zweikammerflasche mit zwei kalibrierten Ausgiessöffnungen; und
- Fig. 11: eine Aufsicht auf den Hals der Zweikammerflasche aus Fig. 10.

In der nachfolgenden Figurenbeschreibung bezeichnen gleiche Bezugszeichen jeweils gleiche Bestandteile.

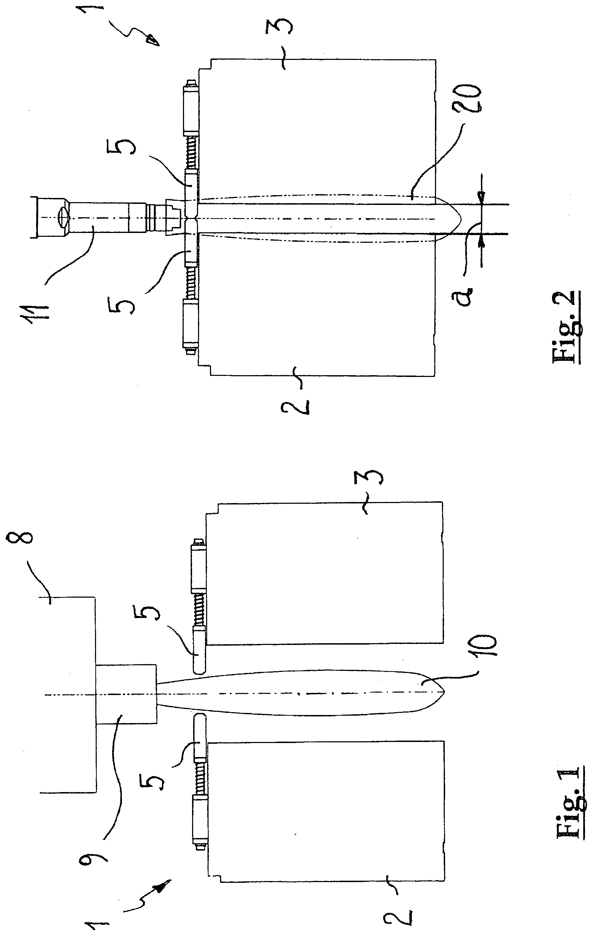

Fig. 1 zeigt ein gesamthaft mit dem Bezugszeichen 1 bezeichnetes Blasformwerkzeug einer Extrusionsblasmaschine mit zwei im geöffneten Zustand dargestellten Blasformhälften 2, 3, die im geschlossenen Zustand eine Formkavität begrenzen. An der Oberseite des Blasformwerkzeugs ist eine Kopfplatte 5 angedeutet, deren Kopfplattenelemente federbelastet sind. In alternativen Ausführungsformen des Blasformwerkzeugs kann die Verstellung der Kopfplattenelemente auch hydraulisch, pneumatisch oder elektrisch erfolgen. Oberhalb des Blasformwerkzeugs 1 ist ein Extrusionskopf 8 angedeutet, aus dessen Extrusionsdüse 9 ein ein- oder mehrschichtiger Kunststoffschlauch 10 extrudiert wird.

Fig. 2 zeigt das Blasformwerkzeug 1 aus Fig. 1 bereits in der Blasstation der Extrusionsblasmaschine. Ein Kunststoffschlauchabschnitt 20 ist abgetrennt und befindet sich zwischen den beiden Blasformhälften 2, 3. Die federbelasteten Kopfplattenelemente der Kopfplatte 5 sind bereits geschlossen und halten den eingelegten Kunststoffschlauchabschnitt 20, der in den nicht sichtbaren Bereichen strichliert angedeutet ist. Die beiden Blasformhälften 2, 3 sind noch nicht vollständig geschlossen, sondern weisen noch einen Abstand a voneinander auf, der etwa 0,5 mm bis etwa 10 mm grösser ist, als der Halsinnendurchmesser des aufzublasenden Kunststoffbehälters. Oberhalb des Blasformwerkzeugs 1 ist ein Kalibrierblasdorn 11 angedeutet, der axial durch eine Öffnung (nicht dargestellt) in der Kopfplatte 5 in den Kunststoffschlauchabschnitt 20 eingefahren wird. Der Kalibrierblasdorn dient zum Aufblasen des Kunststoffschlauchabschnitts zu einem Behälter gemäss der Formkavität und zum Kalibrieren der Ausgiessöffnung des Kunststoffehälters.

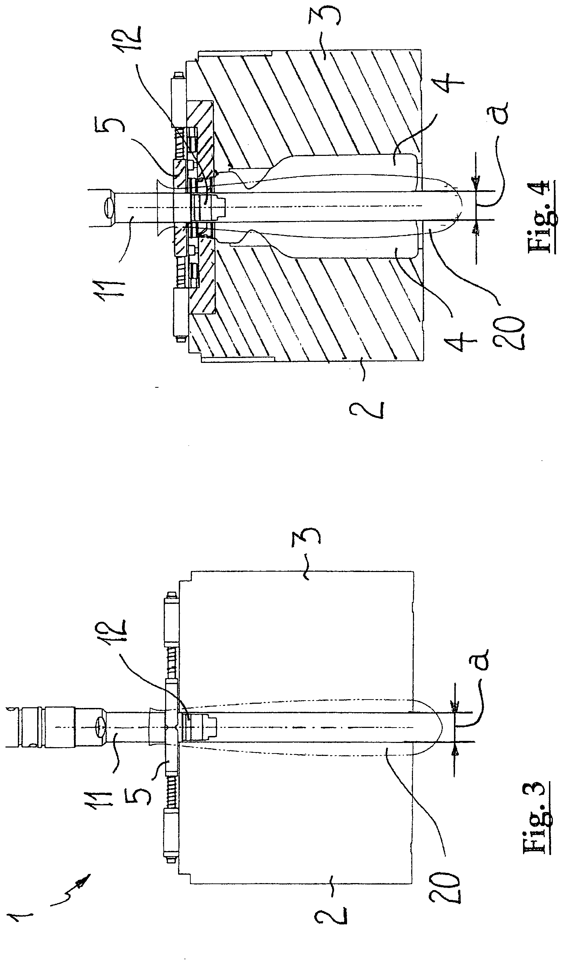

Fig. 3 zeigt den bei immer noch geöffneten Blasformhälften 2, 3 in den Kunststoffschlauchabschnitt 20 vorgeschobenen Kalibrierblasdorn 11. Die Blasformhälften 2, 3 weisen voneinander den Abstand a auf. Der Kalibrierblasdorn 11 besitzt einen Kalibrierbereich 12, der sich in der dargestellten Position bereits im späteren Halsbereich des aus dem Kunststoffschlauchabschnitts 20 aufzublasenden Kunststoffbehälters, unterhalb der geschlossenen Kopfplatte 5 befindet.

Fig. 4 ist eine teilweiser Axialschnitt der Darstellung in Fig. 3. Die sich im Abstand a voneinander befindlichen Blasformhälften 2, 3 des Blasformwerkzeugs 1 weisen jeweils einen Teil der Formkavität 4 auf. Der zwischen den Blasformhälften befindliche Kunststoffschlauchabschnitt ist bei 20 angedeutet. Der durch eine Öffnung in der geschlossenen Kopfplatte 5 in den Kunststoffschlauchabschnitt 20 vorgeschobene Kalibrierblasdorn trägt wiederum das Bezugszeichen 11. Sein Kalibrierbereich ist bei 12 angedeutet und befindet sich unterhalb der geschlossenen Kopfplatte 5.

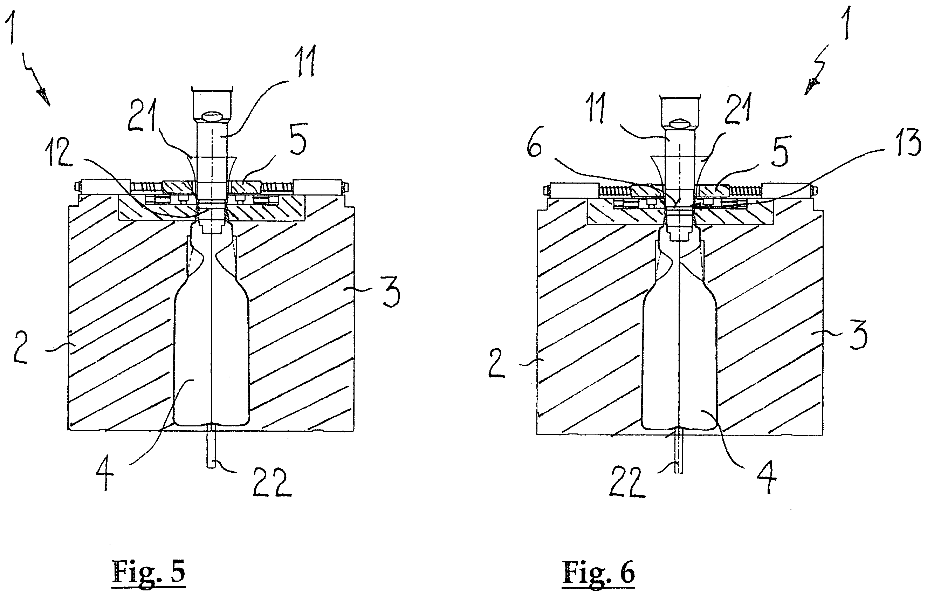

Fig. 5 zeigt das geschlossene Blasformwerkzeug 1, die Blasformhälften 2, 3 sind auf Anschlag zusammengefahren und begrenzen die Formkavität 4, welche die Form des aufzublasenden Kunststoffbehälters festlegt. Der oberhalb der Kopfplatte 5 aus der Formkavität stehende Abschnitt des Kunststoffschlauchabschnitts wird als oberer Butzen 21, der am unteren Ende des Blasformwerkzeugs 1 abragende Abschnitt des Kunststoffschlauchabschnitts wird als unterer Butzen 22 bezeichnet. Der Kunststoffschlauchabschnitt ist im wesentlichen bereits gemäss der Formkavität 4 zu einem Kunststoffbehälter aufgeblasen. Durch das Zusammenfahren der Blasformhälften 2, 3 wird das Kunststoffmaterial im Halsbereich zwischen den Blasformhälften 2, 3 und dem Kalibrierbereich 12 des vorgeschobenen Kalibrierblasdorns 11 radial gequetscht. Dadurch wird der Halsbereich mit der Ausgiessöffnung hinsichtlich seines Innendurchmessers und seiner Innenkontur gemäss dem Kalibrierbereich 12 des Kalibrierblasdorns kalibriert. Die Aussenkontur des Halsbereichs wird gemäss der Ausgestaltung der Formkavität 4 in diesem Bereich geformt. Überschüssiges Kunststoffmaterial wird dabei axial verdrängt. Der Kalibrierblasdorn 11 ist jedoch noch nicht in seine axiale Endposition vorgeschoben, sondern befindet sich in einer Position, die von der Endposition einen axialen Abstand d von etwa 0,3 mm bis etwa 5 mm aufweist.

Die Schnittdarstellung in Fig. 6 entspricht weitgehend derjenigen aus Fig. 5. Nur ist der Kalibrierblasdorn 11 in seine Endposition vorgeschoben worden, in der ein am Kalibrierblasdorn 11 vorgesehener Schneidring 13 gegen einen ringförmig umlaufenden Anschlag 6 im Blasformwerkzeug 1 gepresst ist. Dabei wird der obere Butzen 21 bereits geschnitten.

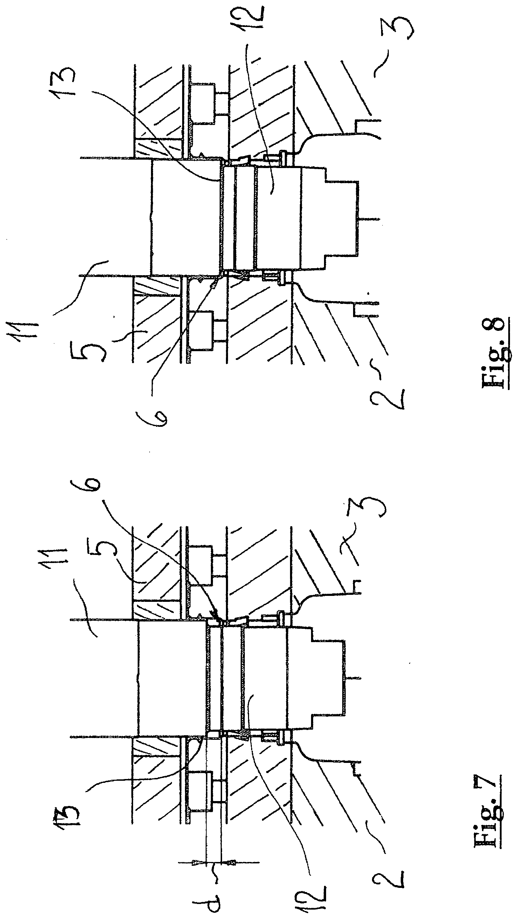

Fig. 7 und 8 zeigen in vergrössertem Massstab die Position des Kalibrierblasdorns 11 vor (Fig. 7) und nach dem Vorschieben in seine axiale Endposition (Fig. 8). Der in Fig. 7 dargestellte axiale Abstand d des Schneidrings 13 vom umlaufenden Anschlag 6 im Blasformwerkzeug beträgt etwa 0,3 mm bis etwa 5 mm. Um diese Wegstrecke muss der Kalibrierblasdorn 11 zum Erreichen seiner Endposition (Fig. 8) nachgefahren werden, in der der Schneidring 13 am umlaufenden Anschlag 6 anliegt. Mit dem Bezugszeichen 12 ist wiederum der Kalibrierbereich am Kalibrierblasdorn 11 bezeichnet. Bei 5 ist die geschlossene Kopfplatte 5 angedeutet. 2 und 3 bezeichnen die beiden Blasformhälften.

Der Kalibrierblasdorn 11 kann während des Kalibrierverfahrens intermittierend vorgeschoben werden, d.h. er wird bis zu seiner vorgesehenen axialen Position im Abstand d von seiner Endposition in den aufzublasenden Kunststoffschlauchabschnitt vorgeschoben, ruht während des vollständigen Zusammenfahrens der Blasformhälften 2, 3 und wird nach dem Schliessen des Blasformwerkzeugs in seine axiale Endposition nachgefahren. In einer alternativen Verfahrensvariante kann der Kalibrierblasdorn 11 auch kontinuierlich vorgeschoben werden, bis er seine axiale Endposition erreicht hat, d.h. dass er auch während des Schliessvorgangs der Blasformhälften kontinuierlich axial vorgeschoben wird. Die axiale Vorschubgeschwindigkeit des Kalibrierblasdorns 11 beträgt etwa 5 mm/s bis etwa 80 mm/s. Diese Vorschubgeschwindigkeit gilt sowohl für den intermittierenden Vorschub als auch für den kontinuierlichen Vorschub des Kalibrierblasdorns 11.

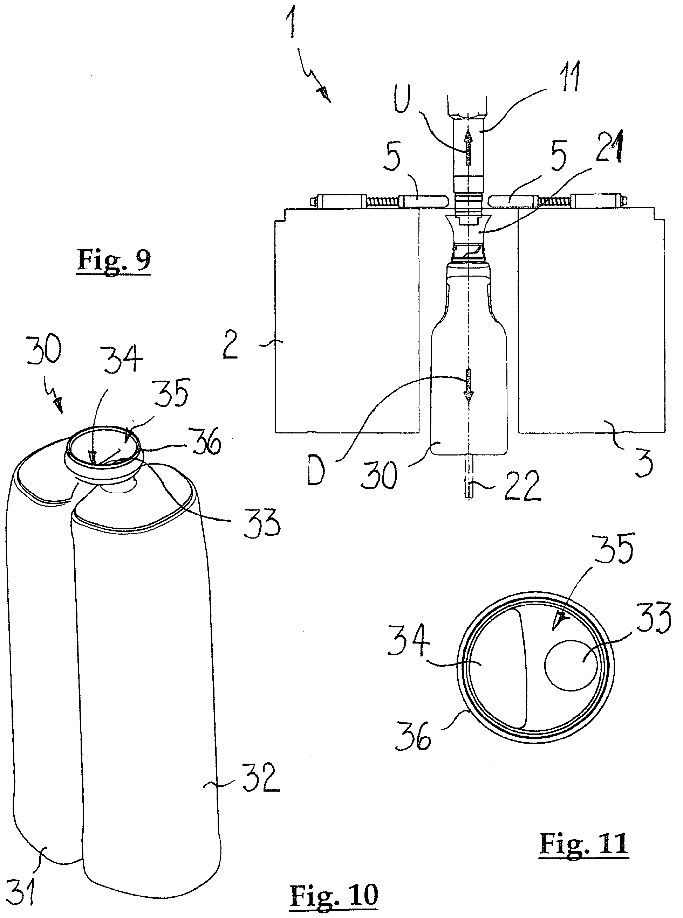

Fig. 9 zeigt eine Ansicht des geöffneten Blasformwerkzeugs 1 mit radial auseinander gefahrenen Blasformhälften 2, 3. Die federbelasteten Kopfplattenelemente der Kopfplatte 5 sind ebenfalls geöffnet. Der Pfeil U deutet an, dass der Kalibrierblasdorn 11 aus dem fertig aufgeblasenen Kunststoffbehälter 30 herausgefahren wird. Der Pfeil D deutet an, dass der Kunststoffbehälter 30 aus dem geöffneten Blasformwerkzeug 1 herausfällt. Bei 21 und 22 sind der vorgeschnittene obere und der untere Butzen angedeutet, die noch entfernt werden müssen.

Fig. 10 zeigt eine beispielsweise Ausführungsvariante eines extrusionsgeblasenen Kunststoffbehälters 30, dessen Ausgiessöffnungen gemäss dem erfindungsgemässen Verfahren kalibriert worden sind. Der Kunststoffbehälter 30 ist ein Zweikammerbehälter mit einer ersten Kammer 31 und einer zweiten Kammer 32. Die erste Kammer 31 weist eine Ausgiessöffnung 34 auf. Die zweite Kammer 32 ist mit einer kleineren Ausgiessöffnung 33 versehen. Ein Hals 36 des Behälters 30 besitzt eine zentrale grössere Ausgiessöffnung 35.

Fig. 11 zeigt eine Aufsicht auf den Hals 36 des Zweikammerbehälters. Die zentrale Ausgiessöffnung 35 am Hals 36 des Behälters und die kleinere Ausgiessöffnung 33 der zweiten Kammer des Behälters weisen einen kreisförmigen Querschnitt auf. Die Ausgiessöffnung 34 der ersten Kammer des Behälters weist eine unregelmässigere, im wesentlichen halbkreisförmige Gestalt auf. Die zentrale Ausgiessöffnung 35 und die kleinere Ausgiessöffnung 33 sind kalibriert. Dies erlaubt es, beispielsweise einen Ausgiessaufsatz zu montieren, der über ein axial vorstehendes Röhrchen dicht mit der kleineren Ausgiessöffnung verbunden ist.

Die Kalibrierung der zentralen Ausgiessöffnung 35 am Hals des Behälters und der kleineren Ausgiessöffnung 33 der ersten Kammer des Behälters erfolgt mit einem Doppel-Kalibrierblasdorn. Dieser weist zwei Teil-Kalibrierblasdorne auf, an denen jeweils Kalibrierbereiche vorgesehen sind. Die Teil-Kalibrierblasdorne sind fest miteinander verbunden und werden gemeinsam vorgeschoben. Der Teil-Kalibrierblasdorn mit dem kleineren Kalibrierdurchmesser überragt dabei den zweiten Teil-Kalibrierdorn für die grössere zentrale Ausgiessöffnung 35. Der Abstand, um den der Teil-Kalibrierdorn mit dem kleineren Kalibrierdurchmesser vorläuft entspricht dabei axialen Abstand der Mündungen der beiden Ausgiessöffnungen 35 und 33. Durch die Verwendung eines Doppel-Kalibrierblasdorns erfolgt das Kalibrieren der beiden Ausgiessöffnungen praktisch zeitgleich.

Das erfindungsgemässe radiale Kalibrierverfahren ist grundsätzlich anstelle der bekannten axialen Kalibrierverfahren bei Kunststoffbehältern mit einer Ausgiessöffnung am Hals des aufgeblasenen Kunststoffbehälters einsetzbar. Auch wenn eine spezielle Innenkontur des Behälterhalses hergestellt werden soll, ist das erfindungsgemässe radiale Kalibrierverfahren gegenüber den Kalibrierverfahren des Stands der Technik zu bevorzugen. Besonders zweckmässig erweist sich das Verfahren insbesondere bei der Verwendung eines Doppel-Kalibrierblasdorns, der zwei Kalibrierbereiche für zwei Ausgiessöffnungen von speziellen Kunststoffbehältern aufweist. Derartige Kunststoffbehälter können beispielsweise zwei Kammern aufweisen. Eine andere Ausführungsvariante des Kunststoffbehälters kann ein im Inneren des Behälters angeordnetes Dosierröhrchen aufweisen, das im Bodenbereich des Behälters mündet. Durch die Verwendung eines Doppel-Kalibrierblasdorns und das erfindungsgemässe radiale Kalibrierverfahren können auch die im Inneren des Behälters angeordnete Ausgiessöffnung des Röhrchens und die Ausgiessöffnung des Halses des Behälters im wesentlichen gleichzeitig bereits beim Blasvorgang des Behälters kalibriert werden. Eine nachträgliche spanabhebende Bearbeitung kann entfallen.

## Patentansprüche

1. Verfahren zur Gewährleistung der Masshaltigkeit einer Ausgiessöffnung (33; 35) in bzw. an einem in einem Extrusionsblasverfahren hergestellten Kunststoffbehälter (30), bei welchem ein Abschnitt (20) eines durch eine Extrusionsdüse (9) ein oder mehrschichtig extrudierten Kunststoffschlauchs (10) in eine Formkavität (4) eines Blasformwerkzeugs (1) eingelegt und durch einen Kalibrierblasdorn (11) gemäss der umschlossenen Formkavität (4) aufgeblasen wird, wobei wenigstens eine Ausgiessöffnung (33; 35) des Kunststoffbehälters hinsichtlich ihres Innendurchmesser und ihrer Innenkontur festgelegt, insbesondere kalibriert, wird, und der fertig aufgeblasene Kunststoffbehälter (30) entformt wird, **dadurch gekennzeichnet, dass** der Kalibrierblasdorn (11) bei noch geöffnetem Blasformwerkzeug (1) axial in den Kunststoffschlauchabschnitt (20) in eine axiale Position eingefahren wird, die einen axialen Abstand (d) von 0,3 mm bis 5 mm von seiner Endposition aufweist, nachdem eine Kopfplatte (5) des Blasformwerkzeugs (1) geschlossen wurde, jedoch bevor das Blasformwerkzeug (1) seine vollständig geschlossene Position erreicht hat, und dass der Kalibrierblasdorn (11) nach dem vollständigen Schliessen des Blasformwerkzeugs (1) in seine axiale Endposition in den Kunststoffschlauchabschnitt (20) vorgeschoben wird.

2. Verfahren nach Anspruch 1, **dadurch gekennzeichnet, dass** das Blasformwerkzeug (1) zwei Blasformhälften (2, 3) umfasst, die etwa senkrecht zur Vorschubrichtung des Kalibrierblasdorns (11) aufeinander zustellbar und wieder trennbar sind, und der Kalibrierblasdorn (11) axial in den Kunststoffschlauchabschnitt (20) eingefahren wird, während die Blasformhälften (2, 3) einen Abstand (a) voneinander aufweisen, der 0,5 mm bis 10 mm grösser ist, als der Innendurchmesser einer Ausgiessöffnung (35) am Hals (36) des Kunststoffbehälters (30).

3. Verfahren nach einem der vorangehenden Ansprüche, **dadurch gekennzeichnet, dass** der Kalibrierblasdorn (11) während des Schliessvorgangs des Blasformwerkzeugs (1) kontinuierlich axial vorgeschoben wird.

4. Verfahren nach Anspruch 3, **dadurch gekennzeichnet, dass** der Kalibrierblasdorn (11) mit einer Geschwindigkeit von etwa 5 mm/s bis etwa 80 mm/s axial vorgeschoben wird.

5. Verfahren nach einem der vorangehenden Ansprüche, **dadurch gekennzeichnet, dass** ein Doppel-Kalibrierblasdorn eingesetzt wird, der zwei Kalibrierbereiche für zwei Ausgiessöffnungen (33, 35) aufweist.

6. Verfahren nach Anspruch 5, **dadurch gekennzeichnet, dass** die Kalibrierbereiche des Doppel-Kalibrierdorns miteinander gekoppelt axial verschoben werden.

7. Verfahren nach Anspruch 6, **dadurch gekennzeichnet, dass** die Kalibrierbereiche des Doppel-Kalibrierdorns in unterschiedlicher axialer Höhe angeordnet werden.

8. Verfahren nach einem der Ansprüche 5 bis 7, **dadurch gekennzeichnet, dass** die Kalibrierbereiche des Doppel-Kalibrierdorns mit voneinander verschiedenen Aussendurchmessern ausgebildet werden.

## Claims

1. Method of ensuring the dimensional accuracy of a pouring opening (33; 35) in or on a plastic container (30) produced by extrusion blow moulding, in the case of which a portion (20) of a flexible plastic tube (10) extruded in one or more layers through an extrusion die (9) is positioned in a cavity (4) of a blow mould (1) and inflated, by way of a calibrating blowing mandrel (11), in accordance with the enclosed cavity (4), wherein at least one pouring opening (33; 35) of the plastic container has its internal diameter and its inner contour defined, in particular calibrated, and the definitively inflated plastic container (30) is demoulded, **characterized in that**, when the blow mould (1) is still open, the calibrating blowing mandrel (11) is moved axially into an axial position in the flexible-plastic-tube portion (20) in which it is at an axial distance (d) of 0.3 mm to 5 mm from its end position, once a head plate (5) of the blow mould (1) has been closed, but before the blow mould (1) has reached its fully closed position, and **in that**, once the blow mould (1) has been fully closed, the calibrating blowing mandrel (11) is advanced into its axial end position in the flexible-plastic-tube portion (20).

2. Method according to Claim 1, **characterized in that** the blow mould (1) comprises two blow-mould halves (2, 3) which can be moved towards one another, and separated again, approximately perpendicularly to the advancement direction of the calibrating blowing mandrel (11), and the calibrating blowing mandrel (11) is moved axially into the flexible-plastic-tube portion (20) while the blow-mould halves (2, 3) are spaced apart from one another by a distance (a) which is 0.5 mm to 10 mm greater than the internal diameter of a pouring opening (35) on the neck (36) of the plastic container (30).

3. Method according to either of preceding claims, **characterized in that** the calibrating blowing mandrel (11) is advanced axially in a continuous manner during the closing operation of the blow mould (1).

4. Method according to Claim 3, **characterized in that** the calibrating blowing mandrel (11) is advanced axially at a speed of approximately 5 mm/s to approximately 80 mm/s.

5. Method according to one of the preceding claims, **characterized in that** use is made of a double calibrating blowing mandrel, which has two calibrating regions for two pouring openings (33, 35).

6. Method according to Claim 5, **characterized in that** the calibrating regions of the double calibrating mandrel are displaced axially in a state in which they are coupled to one another.

7. Method according to Claim 6, **characterized in that** the calibrating regions of the double calibrating mandrel are arranged at different axial heights.

8. Method according to one of Claims 5 to 7, **characterized in that** the calibrating regions of the double calibrating mandrel are designed with mutually different external diameters.

## Revendications

1. Procédé destiné à garantir la précision dimensionnelle d'une ouverture de versement (33 ; 35) dans ou sur un récipient en matière plastique (30) fabriqué selon un procédé d'extrusion-soufflage, selon lequel un tronçon (20) d'une gaine tubulaire en matière plastique (10), extrudé en une ou plusieurs couches à travers une filière d'extrusion (9), est placé dans une empreinte (4) d'un outillage de moulage par soufflage (1) et est soufflé par un mandrin de soufflage et de calibrage (11), en fonction de l'empreinte (4) qui l'entoure, au moins une ouverture de versement (33 ; 35) du récipient en matière plastique étant définie, en particulier calibrée, en ce qui concerne son diamètre intérieur et son contour intérieur, et le récipient en matière plastique (30) soufflé et terminé étant démoulé, **caractérisé en ce que** le mandrin de soufflage et de calibrage (11), lorsque l'outillage de moulage par soufflage (1) est encore ouvert, est introduit axialement dans le tronçon de gaine tubulaire en matière plastique (20), dans une position axiale qui présente une distance axiale (d) comprise entre 0,3 m et 5 mm par rapport à sa position finale, après qu'une plaque de recouvrement (5) de l'outillage de moulage par soufflage (1) a été fermée, mais avant que l'outillage de moulage par soufflage (1) n'ait atteint sa position complètement fermée, et **en ce que**, après la fermeture complète de l'outillage de moulage par soufflage (1), le mandrin de soufflage et de calibrage (11) est avancé dans sa position finale axiale, dans le tronçon de gaine tubulaire en matière plastique (20).

2. Procédé selon la revendication 1, **caractérisé en ce que** l'outillage de moulage par soufflage (1) comprend deux demi-coquilles de moule de soufflage (2, 3) qui peuvent être rapprochées l'une de l'autre puis séparées, à peu près perpendiculairement à la direction d'avance du mandrin de soufflage et de calibrage (11), et que le mandrin de soufflage et de calibrage (11) est engagé axialement dans le tronçon de gaine tubulaire en matière plastique (20), pendant que les demi-coquilles de moule de soufflage (2, 3) présentent une distance (a) réciproque qui est supérieure d'environ 0,5 mm à 10 mm au diamètre intérieur d'une ouverture de versement (35) sur le col (36) du récipient en matière plastique (30).

3. Procédé selon l'une des revendications précédentes, **caractérisé en ce que** le mandrin de soufflage et de calibrage (11) est avancé axialement de façon continue pendant l'opération de fermeture de l'outillage de moulage par soufflage (1).

4. Procédé selon la revendication 3, **caractérisé en ce que** le mandrin de soufflage et de calibrage (11) est avancé axialement à une vitesse allant d'environ 5 mm/s à environ 80 mm/s.

5. Procédé selon l'une des revendications précédentes, **caractérisé en ce que** l'on utilise un double mandrin de soufflage et de calibrage qui présente deux zones de calibrage pour deux ouvertures de versement (33, 35).

6. Procédé selon la revendication 5, **caractérisé en ce que** les zones de calibrage du double mandrin de calibrage sont déplacées axialement en étant couplées l'une à l'autre.

7. Procédé selon la revendication 6, **caractérisé en ce que** les zones de calibrage du double mandrin de calibrage sont disposées à des hauteurs axiales différentes.

8. Procédé selon l'une des revendications 5 à 7, **caractérisé en ce que** les zones de calibrage du double mandrin de calibrage sont réalisées avec des diamètres extérieurs différents l'un de l'autre.
